(19) Europäisches Patentamt
European Patent Office
Office européen des brevets

(11) **EP 1 702 810 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
***B60R 21/015*** *(2006.01)*

(21) Anmeldenummer: **06005150.5**

(22) Anmeldetag: **14.03.2006**

(54) **Umschaltvorrichtung und Verfahren zum Umschalten einer Fahrzeuginsassen-Rückhalteeinrichtung**

Switching device and method for switching a vehicle occupant restraint device

Dispositif de commutation et procédé pour commuter un dispositif de retenue d'un occupant de véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.03.2005 DE 102005012322**

(43) Veröffentlichungstag der Anmeldung:
**20.09.2006 Patentblatt 2006/38**

(73) Patentinhaber: **GM Global Technology Operations, Inc.**
**Detroit, MI 48265-3000 (US)**

(72) Erfinder:
• **Barth, Armin**
**55237 Lonsheim (DE)**
• **Laubner, Hartmut**
**64596 Nauheim (DE)**

(74) Vertreter: **Strauss, Peter**
**Adam Opel GmbH**
**Patent- und Markenrecht / A0-02**
**65423 Rüsselsheim (DE)**

(56) Entgegenhaltungen:
DE-A1- 10 231 363     DE-A1- 19 960 179
GB-A- 2 289 563       US-A- 6 045 156
US-A- 6 164 693       US-B1- 6 224 095

**Beschreibung**

Die Erfindung betrifft eine Umschaltvorrichtung für eine Fahrzeuginsassen-Rückhalteeinrichtung und ein Verfahren zum Umschalten einer Fahrzeuginsassen-Rückhalteeinrichtung, die ein Umschalten zwischen einem aktiven Modus und einem deaktivierten Modus der Rückhalteeinrichtung ermöglichen.

Aus der Offenlegungsschrift DE 102 26 472 A1 ist eine Sicherheitseinrichtung für Kraftfahrzeuge mit einem oder mehreren Airbags bekannt, welche über einen willkürlich betätigbaren Schalter deaktivierbar sind. Der Schalter ist an einer Stelle des Kraftfahrzeugs angeordnet, die nur bei einer geöffneten Fahrzeugtür erreichbar ist. Damit soll ein unabsichtliches Deaktivieren des Airbags verhindert werden.

Die Offenlegungsschrift DE 101 39 194 A1 betrifft ein Fahrzeugairbag-Rückhaltesystem mit automatischer Erkennung der Sitzbelegung und automatischer Deaktivierung eines zugehörigen Airbags. Eine Anzeige warnt den Fahrzeugführer, wenn der Airbag des Fahrgastsitzes deaktiviert ist.

In der Offenlegungsschrift DE 199 60 179 A1 ist eine Sicherheitseinrichtung für Kraftfahrzeuge mit einem oder mehreren Airbags beschrieben, die über einen Schalter deaktiviert werden können. Die Deaktivierung ist nur möglich, wenn das Zündschloss betätigt ist, um eine unbeabsichtigte Deaktivierung eines Airbags zu verhindern. Über eine Anzeige ist der Status der Airbags bezogen auf den jeweiligen Sitzplatz ablesbar. Die Anzeige ist ferner mit Warnleuchten versehen, um besonders auf den deaktivierten Zustand hinzuweisen.

Die US-A-6164693, als nächstliegender Stand der Technik betrachtet, zeigt eine Umschaltvorrichtung für eine Fahrzeuginsassen-Rückhaltevorrichtung mit:

einem Steuergerät zum Auslösen mindestens einer Fahrzeuginsassen Rückhalteeinrichtung;

mindestens einem manuell betätigbaren Umschalter; und

einem Logikmodul, das ein Umschaltsignal zum Umschalten der Fahrzeuginsassen-Rückhalteinrichtung zwischen einem aktiven und deaktivierten Modus ausgibt.

Der vorliegenden Erfindung liegt nun die Aufgabe zugrunde, eine Umschaltvorrichtung für eine Fahrzeuginsassen-Rückhalteeinrichtung und ein Verfahren zum Umschalten einer Fahrzeuginsassen-Rückhaltevorrichtung bereitzustellen, die eine zeitweise Deaktivierung einer Fahrzeuginsassen-Rückhalteeinrichtung bei hohem Schutz gegenüber unabsichtlichem Verstellen des Systems gestatten.

Erfindungsgemäß wird diese Aufgabe mit einer Umschaltvorrichtung und einem Verfahren gelöst, wie sie in den unabhängigen Patentansprüchen definiert sind.

Demgemäß ist eine Umschaltvorrichtung für eine Fahrzeuginsassen-Rückhalteeinrichtung vorgesehen, die ein Steuergerät zum Auslösen der Fahrzeuginsassen-Rückhalteeinrichtung und wenigstens einen Umschalter zum Umschalten der Fahrzeuginsassen-Rückhalteeinrichtung zwischen einem aktiven und einem deaktivierten Modus aufweist. Ein Logikmodul gibt ein Umschaltsignal $S_U$ bzw. Betriebszustand aus, wenn es eine manuelle Betätigung des Umschalters mindestens eine definierte Bedingung erfüllt.

Das Verfahren zum Umschalten einer Fahrzeuginsassen-Rückhaltevorrichtung zwischen einem aktiven und einem deaktivierten Modus zeichnet sich dadurch aus, dass zwischen dem aktiven und dem deaktivierten Modus gewechselt wird, wenn wenigstens ein Umschalter manuell betätigt wird und die Betätigung des Umschalters innerhalb eines Zeitfensters nach Aktivieren der Zündung des Fahrzeugs erfolgt ist. Alternativ oder kumulativ erfolgt der Wechsel zwischen den beiden Modi, wenn zwei getrennt angeordnete Umschalter im Wesentlichen gleichzeitig betätigt werden.

Vorteilhafte Ausgestaltungen und Weiterbildungen der Erfindung sind Gegenstand der Unteransprüche sowie der Beschreibung unter Bezugnahme auf die Zeichnung.

Ein Vorteil der erfindungsgemäßen Umschaltvorrichtung besteht darin, dass durch die manuelle Betätigung des Umschalters, bei gleichzeitiger hoher Sicherheit vor Fehlbedienung des Umschalters, auf teure, automatische Sitzbelegungs-Erkennungssysteme verzichtet werden kann.

Eine hohe Sicherheit gegen eine Fehlbedienung des Umschalters wird bei einer Ausführungsform der erfindungsgemäßen Umschaltvorrichtung durch vorsehen von zwei Umschaltern erreicht, wobei die zwei Umschalter im Wesentlichen gleichzeitig betätigt werden müssen, damit ein Wechsel der Modi erfolgt. Bei dieser Ausführungsform können bereits im Fahrzeug vorhandene Bedienelemente, beispielsweise Lenkstockhebel (LSH) als Umschalter verwendet werden.

Ein weiterer Vorteil besteht darin, dass erfindungsgemäß nicht auf Bedienelemente einer Multifunktionsbedieneinrichtung zurückgegriffen werden muss, so dass ein umständliches Navigieren durch verschiedene Bildschirmmenüs entfällt. Aufgrund der bequemen und einfachen Bedienung der beiden Umschalter wird der Benutzer nicht davon abgehalten, wegen einer nur kurzfristigen Unterbringung eines Kindes auf dem Beifahrersitz den Beifahrerairbag abzuschalten. Die oft nicht gewünschte Anordnung zusätzlicher Bedienelemente und die damit verbundene Verkabelung entfallen bei der erfindungsgemäßen Umschaltvorrichtung.

Weiter verbessert wird die Bediensicherheit, wenn die Deaktivierung oder die Aktivierung der Fahrzeuginsassen-Rückhalteeinrichtung nur innerhalb eines Zeitfensters erfolgen kann und/oder wenn das einzelne oder kumulative Vorliegen bestimmter Bedingungen (beispielsweise laufender Motor, sich bewegendes Fahrzeug, Überschreiten einer maximalen vordefinierten Zeitdauer, etc.) ein Umschalten zwischen den aktiven/deaktivierten Modi unterdrückt.

In einer bevorzugten Weiterbildung der Erfindung erhält der Benutzer einen Hinweis über den Status des Umschaltvorgangs, insbesondere wenn ein definierter Zustand vorliegt, indem ein Wechsel der Modi bzw. Betriebszustände erfolgen kann, oder wenn ein Wechsel der Modi tatsächlich erfolgt.

Vorzugsweise sind mehrere Fahrzeuginsassen-Rückhalteeinrichtungen, insbesondere ein Front- und ein Seitenairbag für den Beifahrer, durch den wenigstens einen Umschalter deaktivierbar und wieder aktivierbar.

Ausführungsbeispiele der Erfindung sind in den Figuren der Zeichnung wiedergegeben und in der nachfolgenden Beschreibung näher erläutert. Es zeigen:

Fig. 1    einen mit einem Logikmodul verbundenen Umschalter;

Figur 2    einen an der Armaturentafel eines Fahrzeugs angeordneten Umschalter;

Figur 3    zwei als Lenkstockhebel gestaltete Umschalter;

Figur 4a bis Figur 4g    Signalzustandsdiagramme für ein Umschaltsignal in Abhängigkeit eines Zeitfensters und einer Bedienzeit des Umschalters.

In allen Figuren der Zeichnung sind gleiche bzw. funktionsgleiche Elemente - sofern nichts anderes angegeben ist - mit denselben Bezugszeichen versehen.

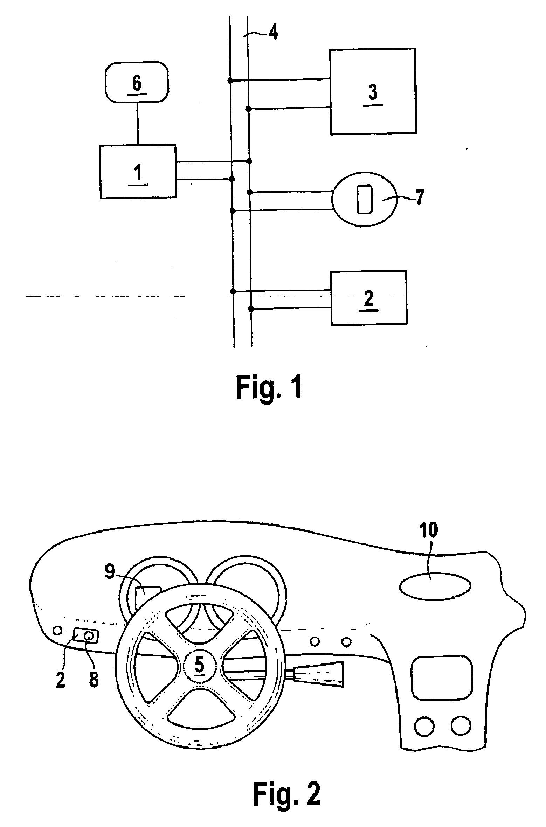

Figur 1 veranschaulicht ein Steuergerät 1, das über einen Umschalter 2 und ein Logikmodul 3 Umschaltsignale erhält, die über eine Datenleitung bzw. einen Datenbus 4, insbesondere über einen CAN-Bus, übertragen werden. Aufgrund dieser Signale schaltet das Steuergerät 1 zwischen einem aktiven Modus bzw. Betriebszustand, in dem eine Fahrzeuginsassen-Rückhalteeinrichtung 6 bei Eintreffen des Signals eines Crash-Sensors ausgelöst werden kann, und einem deaktivierten Modus, in dem eine Auslösung der Fahrzeuginsassen-Rückhalteeinrichtung 6 unterbleibt. Bei dem Umschalter 2 handelt es sich vorzugsweise um einen Taster, der durch eine Bedienperson gedrückt bzw. betätigbar ist.

Bei der Fahrzeuginsassen-Rückhalteeinrichtung 6 handelt es sich vorzugsweise um einen Airbag für den Beifahrer. Es kann sich bei der Fahrzeuginsassen-Rückhalteeinrichtung 6 auch um Gurtstraffer handeln.

Nach dem Einschalten einer Zündung 7 befindet sich die Fahrzeuginsassen-Rückhalteeinrichtung 6 in demjenigen Betriebszustand, der zuletzt eingestellt worden ist.

Ist die Zündung 7 aktiviert, liegt ein definierter Betriebszustand vor. Diesen Betriebszustand überprüft das Logikmodul 3, bevor es gegebenenfalls ein Umschaltsignal $S_U$ ausgibt, auf dessen Grundlage der Modus bzw. Betriebszustand der Fahrzeuginsassen-Rückhalteeinrichtung 6 zwischen "aktiv" und "deaktiviert" umgeschaltet wird bzw. verstellt wird.

Eine Betätigung des Umschalters 2 bzw. ein Drücken des Tasters 2 wird als Flankenwechsel eines Steuersignales erfasst, sofern der Flankenwechsel nach Aktivierung der Zündung 7 erfolgt. Hierdurch wird verhindert, dass ein verklemmter bzw. gedrückter Taster 2, vor Aktivierung der Zündung zur Ausgabe des Umschaltsignales $S_U$ führen kann.

Eine zusätzliche Sicherheit gegen eine Fehlbedienung wird erfindungsgemäß durch das Vorsehen einer oder mehrerer weiterer Bedingungen als Voraussetzung für das Umschalten der Fahrzeuginsassen-Rückhalteeinrichtung 6 erreicht.

Als eine solche weitere definierte Bedingung wird von dem Logikmodul 3 erkannt, ob die Betätigung des Umschalters 2 innerhalb eines Verstell-Zeitfensters $T_{VX}$ erfolgt ist. Dieses Verstell-Zeitfenster $T_{VX}$ öffnet sich zu einem Zeitpunkt $t_{v0}$ in Abhängigkeit von einem Einschalten der Zündung 7. Eine geeignete vordefinierte Zeitspanne $T_{V10}$ (Referenzwert) für die Dauer des Verstell-Zeitfensters $T_{VX}$ ist vorzugsweise eine vorgegebene Zeitspanne von weniger als 20 Sekunden, beispielsweise eine Zeitspanne von etwa 10 Sekunden.

Innerhalb des geöffneten Zeitfensters $T_{VX}$ wird dem Benutzer die Möglichkeit zur Verstellung der Fahrzeuginsassen-Rückhalteeinrichtung 6 eindeutig signalisiert.

Von dem Logikmodul 3 wird ferner die Bedienzeitspanne $T_B$ erfasst und geprüft, für die der Umschalter 2 betätigt bzw. bedient wurde. Beginnt die Bedienzeitspanne $T_B$ nach dem Referenzzeitfenster $T_{V10}$ wird dies vom System nicht als Verstellwunsch bzw. Umschaltwunsch interpretiert.

Erreicht innerhalb des offenen Verstell-Zeitfensters $T_{VX}$ die Dauer $T_B$ einer Betätigung des Umschalters 2 eine vorgegebene Mindestbedienzeit $T_{B\_US1}$, geht das System in einen definierten Zustand über, nämlich in eine so genannte Umschaltbereitschaft UB. Mit Erreichen der Umschaltbereitschaft UB wird das Verstell-Zeitfenster $T_{VX}$ geschlossen. Als Mindestbedienzeit $T_{B\_UB1}$ eignet sich eine Zeitspanne von weniger als 10 Sekunden, vorzugsweise eine Dauer von etwa 3 Sekunden.

Wird der Umschalter 2 nach Erreichen der Umschaltbereitschaft UB noch vor Ablauf einer maximal zulässigen Bedienzeit $T_{B\_UB2}$ wieder losgelassen bzw. endet die Betätigung des Umschalters 2, wird von dem Logikmodul 3 ein Umschaltsignal $S_U$ ausgegeben. Dieses Umschaltsignal $S_U$ bewirkt ein Umschalten zwischen dem bisher eingestellten Betriebszustand (aktiv/passiv) der Fahrzeuginsassen-Rückhalteeinrichtung 6 in den anderen Betriebszustand (passiv/aktiv).

Überschreitet dagegen die Bedienzeitspanne $T_B$ die zulässige maximale Bedienzeit $T_{B\_UB2}$ so wird ein Fehlersignal und kein Umschaltsignal $S_U$ von dem Logikmodul 3 ausgegeben. Ein geeigneter Wert für die zulässige maximale Bedienzeit $T_{B\_UB2}$ sind 5 Sekunden. Das Abweisen des Umschaltwunsches bzw. Verstellwunsches wird entsprechend signalisiert.

Wenn innerhalb der Dauer des Referenzzeitfensters $T_{V10}$ eine Betätigung des Umschalters 2 zwar begonnen, aber noch nicht abgeschlossen wurde, wird das Verstell-Zeitfenster $T_{VX}$ über das Referenzzeitfenster $T_{V10}$ hinaus offen gehalten. Die maximale Dauer $T_{Vmax}$ für das Verstell-Zeitfenster $T_{VX}$ beträgt in diesem Beispiel $T_{V10} + T_{B\_UB1}$. Es wird also der Referenzwert $T_{V10}$ für das Zeitfenster maximal um die Mindestbedienzeit $T_{B\_UB1}$ für die Betätigung des Umschalters 2 verlängert. Lässt der Benutzer den Umschalter 2 bereits vorher los, wird das Verstell-Zeitfenster $T_{VX}$ sofort geschlossen. Ein Umschaltsignal $S_U$ wird dann von dem Logikmodul 3 nicht ausgegeben.

Wenn seit Öffnung des Verstell-Zeitfensters $T_{VX}$ eine maximal mögliche Zeitspanne $T_{max}$ bis unmittelbar vor Ende der Umschaltbereitschaft UB überschritten ist, wird die Umschaltbereitschaft UB abgebrochen bzw. beendet und eine Fehlermeldung ausgegeben. Die maximale Zeitspanne $T_{max}$, die für eine Verstellaktion vorgesehen ist, ergibt sich aus der Summe des Referenzwerts $T_{V10}$ des Verstell-Zeitfensters $T_{VX}$ und der maximal zulässigen Bedienzeit $T_{B\_UB2}$.

Neben der Missachtung der zeitlichen Rahmenbedingungen bewirken in diesem Beispiel weitere Bedingungen oder Zustände eine Ablehnung des Verstellwunsches bzw. einen Abbruch bzw. Ende der Umschaltbereitschaft UB und die Ausgabe einer Fehlermeldung. Diese Bedingungen sind beispielsweise eine Bewegung des Fahrzeugs und/oder der Betrieb bzw. das Anlassen des Motors.

Um nach einer Beendigung der Umschaltbereitschaft UB dennoch den Modus bzw. Betriebszustand der Fahrzeuginsassen-Rückhalteeinrichtung 6 wechseln zu können, muss zunächst die Zündung 7 wieder ausgeschaltet werden. Nach erneutem Einschalten der Zündung 7 wird das Verstell-Zeitfenster $T_{VX}$ wieder geöffnet.

Überschreitet die Bedienzeit $T_B$ des Umschalters 2 eine vordefinierte Bedienzeit $T_{B\_DTC}$, wird eine Fehlermeldung verursacht. Es handelt sich dabei um eine definierte Zeitspanne nach Ablauf von $T_{B\_UB2}$, die verstreicht bis ein Fehlereintrag "Umschalter klemmt" im Steuergerät 1 gesetzt wird.

Wird der Umschalter 2 für die Verstellung bzw. Umschaltung der Fahrzeuginsassen-Rückhalteeinrichtung 6 und zugleich ein oder mehrere benachbart angeordnete Taster bzw. Umschalter für andere Einrichtungen betätigt, wird die Umschaltprozedur abgebrochen. Im Falle eines erkannten Systemfehlers wird der zuletzt eingestellte Betriebszustand im laufenden Betrieb dauerhaft beibehalten. Es ist keine Änderung bzw. kein Wechsel des zuletzt eingestellten Betriebszustandes nach Schließen des Zeitfensters $T_{VX}$ zulässig, so dass sich der Benutzer auf die von ihm getätigte voreinstellung des Systems verlassen kann.

In Figur 2 ist der Umschalter 2 als Taster ausgebildet, also nicht als klassischer Schalter, der in bestimmte Positionen eingerastet werden kann. Der Umschalter bzw. Taster 2 ist vorzugsweise entsprechend beschriftet bzw. mit einem Symbol versehen. Eine erste Anzeige 8 ist in dem Taster 2 integriert und zeigt den aktuellen Status des Rückhaltesystems an.

Die Ausgabe des Status der Fahrzeuginsassen-Rückhalteeinrichtung 6 des Rückhaltesystems erfolgt visuell über die erste Anzeige 8 und eine zweite Anzeige 9, die vorzugsweise in der Instrumententafel vorgesehen ist sowie akustisch über einen Lautsprecher 10.

Die erste Anzeige 8 ist dafür vorgesehen, den aktuellen Status bzw. Betriebszustand der Fahrzeuginsassen-Rückhalteeinrichtung 6 anzuzeigen, während die zweite Anzeige 9 zusätzlich das geöffnete Zeitfenster $T_{VX}$ signalisiert.

Der aktuelle Status der Fahrzeuginsassen-Rückhalteeinrichtung 6 (aktiviert oder deaktiviert) wird durch die in dem Umschalter 2 integrierte und für Fahrer und Beifahrer gut sichtbare erste Anzeige 8 angezeigt. Die Anzeige 8 kann genauso wie die zweite Anzeige 9 ein Symbol aufweisen.

Nach dem Einschalten der Zündung 7 blinkt die zweite Anzeigeeinrichtung 9, um anzuzeigen, dass die Fahrzeuginsassen-Rückhalteeinrichtung 6 zwischen den beiden Betriebszuständen "aktiviert" und "deaktiviert" umgeschaltet werden kann.

Eine Eingabeprozedur wird gestartet, wenn eine Betätigung des Umschalters 2 während der vordefinierten Zeitspanne $T_{V10}$ (Referenzwert für das Zeitfenster $T_{VX}$) erkannt wurde. Die Betätigung des Umschalters 2 wird durch eine charakteristische akustische Ausgabe (Signalton) an den Benutzer quittiert. Die Art der Quittierung kann derart ausgestaltet sein, dass sie eine Unterscheidung gegenüber der Betätigung aller anderen Bedien- und Stellelemente des Fahrzeugs erlaubt.

Erfolgt keinerlei Interaktion des Bedieners, d.h. wird die Zündung 7 zwar aktiviert und anschließend der Umschalter 2 innerhalb der vordefinierten Zeitspanne $T_{V10}$ nicht bzw. zu kurz betätigt, bleibt der zuletzt eingestellte Betriebszustand erhalten.

Überschreitet die Bedienzeit $T_B$ des Umschalters 2 die Mindestbedienzeit $T_{B\_UB1}$ wird der Eintritt in die Umschaltbereitschaft UB akustisch und optisch signalisiert. Wird anschließend der Umschalter 2 noch vor Ablauf der vorgegebenen maximal zulässigen Bedienzeit $T_{B\_UB2}$ losgelassen, erfolgt durch Abgabe eines Umschaltsignales $S_U$ ein Umschalten bzw. Wechsel zwischen den Betriebszuständen. Dies wird in einer möglichen Ausführungsform durch die beiden Anzeigen 8 und 9 visuell angezeigt. Wird hingegen durch weitere Betätigung des Umschalters 2 die maximal zulässige Bedienzeit $T_{B\_UB2}$ überschritten, wird der Benutzer über die Abweisung seines Verstellwunsches akustisch und/oder visuell informiert-, wobei der letzte Betriebszustand erhalten bleibt und die Anzeigen 8, 9 in den Ausgangszustand zurückkehren.

Solange ein Umschalten während des offenen Verstell-Zeitfensters $T_{VX}$ möglich ist oder eine Betätigung des Umschalters 2 innerhalb des offenen Verstell-Zeitfensters $T_{VX}$ stattfindet, wird vorzugsweise eine Auslösung der umschaltbaren Fahrzeuginsassen-Rückhalteeinrichtung(en) 6 unterbunden. Dies gilt selbst dann, wenn das Steuergerät 1 einen auf das Fahrzeug wirkenden Impuls feststellt.

Es ist darauf zu achten, dass keine Interferenzen mit anderen Fahrzeugsystemen auftreten, wie beispielsweise dem Vor-/Nachglühen beim Dieselmotor, die typischer Weise während des definierten Zeitfensters $T_{V10}$ bzw. während der maximalen Zeitspanne der Umschaltbereitschaft $T_{max}$ ebenfalls aktiv sind. Vorzugsweise werden die Systeme aufeinander synchronisiert.

Ein wesentlicher Vorteil der erfindungsgemäßen Umschaltvorrichtung besteht darin, dass sie nicht in eine umständlich zu bedienende Menüarchitektur eingebettet ist.

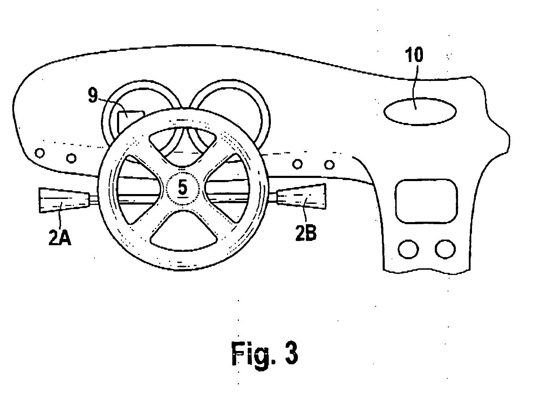

Figur 3 veranschaulicht eine Ausführungsform der erfindungsgemäßen Umschaltvorrichtung, bei der das Umschalten zwischen dem aktiven und dem deaktivierten Modus der Fahrzeuginsassen-Rückhalteeinrichtung 6 mittels zweier Umschalter 2A, 2B, also mittels Zwei-Hand-Bedienung erfolgt. Dabei handelt es sich vorzugsweise um zwei Lenkstockhebel (LSH), die ohnehin im Fahrzeug unabhängig von den verfügbaren Ausstattungsvarianten vorhanden und in bekannter Weise mit weiteren Funktionen belegt sind.

Die Betätigung der beiden Umschalter 2A, 2B muss, wie oben in Zusammenhang mit Figur 1 beschrieben, während eines offenen Verstell-Zeitfensters $T_{VX}$ erfolgen. Die beiden als Lenkstockhebel (LSH) ausgebildeten Umschalter 2A, 2B müssen hierzu gleichzeitig und für die vordefinierte Mindestbedienzeit $T_{B\_UB1}$ in eine definierte Position gebracht werden, um ein Umschalten zu bewirken.

Die beiden Umschalter 2A, 2B sind durch eine Lenksäule 5, die in der Figur 3 als durch das Lenkrad verdeckt und daher punktiert dargestellt ist, räumlich voneinander abgesetzt. Durch die räumlich getrennte Anordnung ist eine irrtümliche gleichzeitige Betätigung beider Umschalter 2A, 2B weitestgehend ausgeschlossen. Die Redundanz der Eingabe ermöglicht eine Erhöhung der Betriebssicherheit durch Plausibilisierung, da erkannt werden muss, dass der Zustand "zwei Lenkstockhebel betätigt" vorliegt.

Der gegenwärtige Modus bzw. Betriebszustand der umschaltbaren Fahrzeuginsassen-Rückhalteeinrichtung 6 wird durch die zweite Anzeige 9 signalisiert. Statusänderungen und Rückmeldungen an den Bediener werden visuell und/oder akustisch ausgegeben.

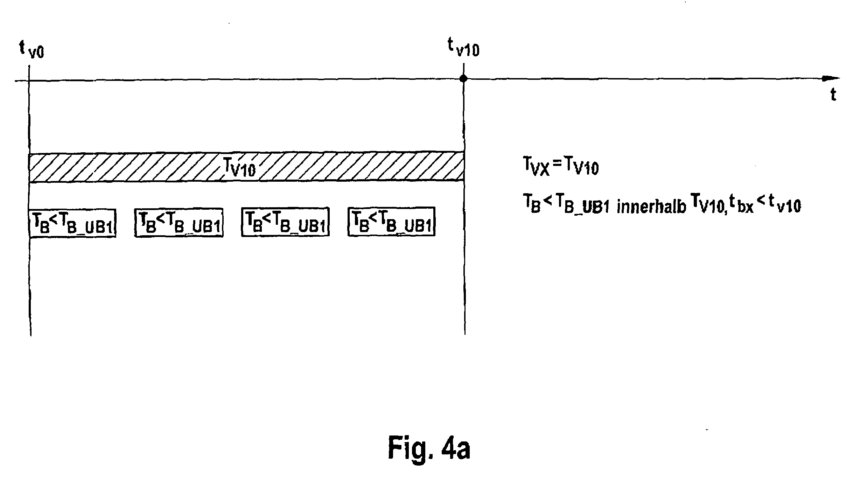

Die Figuren 4a-4g zeigen unterschiedliche Fallkonstellationen für die Bedienung des Umschalters 2.

Figur 4a zeigt ein Verstell-Zeitfenster $T_{VX}$, das für die Dauer des Referenzwerts $T_{V10}$ nach Betätigung der Zündung 7 zum Zeitpunkt $t_{v0}$ geöffnet ist.

$$T_{VX} = T_{V10}$$

Innerhalb des offenen Verstell-Zeitfensters $T_{VX}$ wird in dem in Fig. 4a dargestellten Fall von einem Benutzer der Umschalter 2 viermal betätigt. Die Bedienzeit $T_B$ des Umschalters 2 ist jedoch dabei jeweils kleiner als die Mindestbedienzeit $T_{B\_UB1}$, die erforderlich ist, um während des offenen Zeitfensters $T_{VX}$ in die Umschaltbereitschaft UB wechseln zu können.

$T_B < T_{B\_UB1}$ innerhalb $T_{V10}$,

wobei für den Zeitpunkt des Endes des Tastendrückens $t_{bx}$ gilt:

$$t_{bx} < t_{v10}$$

Ein Umschaltsignal $S_U$, das einen Wechsel zwischen dem aktiven und dem deaktivierten Modus der FahrzeuginsassenRückhalteeinrichtung 6 herbeiführt, wird daher in diesem Falle nicht ausgelöst.

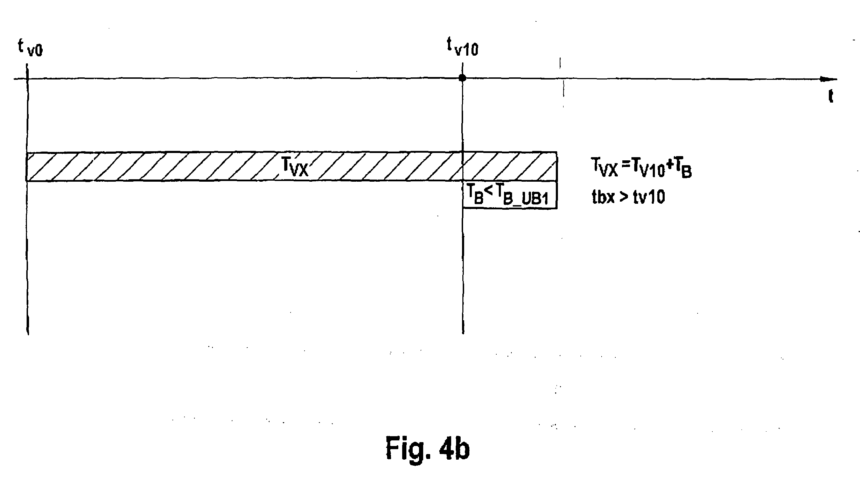

In dem in Figur 4b dargestellten Fall wird der Umschalter 2 erst mit Ablauf des Referenzwerts $T_{V10}$ betätigt.

Das Verstell-Zeitfenster $T_{VX}$ bleibt daher nach Ablauf des Referenzzeitfensters $T_{V10}$ zum Zeitpunkt $t_{V10}$ geöffnet. Da aber die Bedienzeit $T_B$ des Umschalters 2 kürzer als die notwendige Mindestbedienzeit $T_{B\_UB1}$ ist, wird in diesem Falle ebenfalls kein Umschaltsignal $S_U$ ausgelöst. Mit Loslassen des Umschalters 2 zum Zeitpunkt $t_{bx}$ wird das Verstell-Zeitfenster $T_{VX}$ wieder geschlossen, ohne dass das System in diesem Zyklus nicht in die Umschaltbereitschaft UB eintritt.

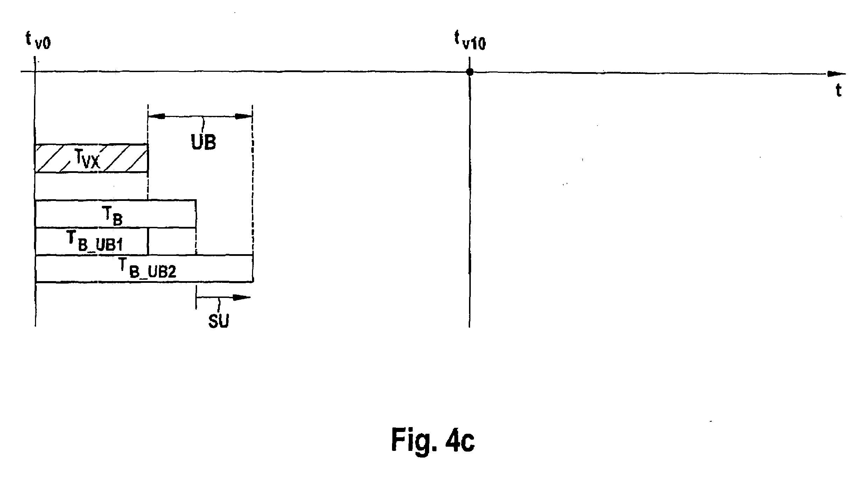

Figur 4c zeigt einen weiteren Fall bei dem eine Betätigung des Umschalters 2 vor Ablauf des Referenzzeitfensters $T_{V10}$ die notwendige Mindestbedienzeit $T_{B\_UB1}$ überschreitet, aber nicht solange dauert, dass die maximal zulässige Bedienzeit $T_{B\_UB2}$ erreicht wird. Mit Überschreiten der Mindestbedienzeit $T_{B\_UB1}$ wird das zeitfenster $T_{VX}$ geschlossen und das System tritt in die Umschaltbereitschaft UB ein. Das Umschaltsignal $S_U$ wird aber erst ausgelöst und der Wechsel zwischen dem aktivierten und deaktivierten Modus erfolgt erst dann, wenn die Bedienzeit $T_B$ die maximal zulässige Bedienzeit $T_{B\_UB2}$ nicht überschritten hat und keine sonstigen Bedingungen vorliegen, die ein Ende der Umschaltbereitschaft UB bewirken.

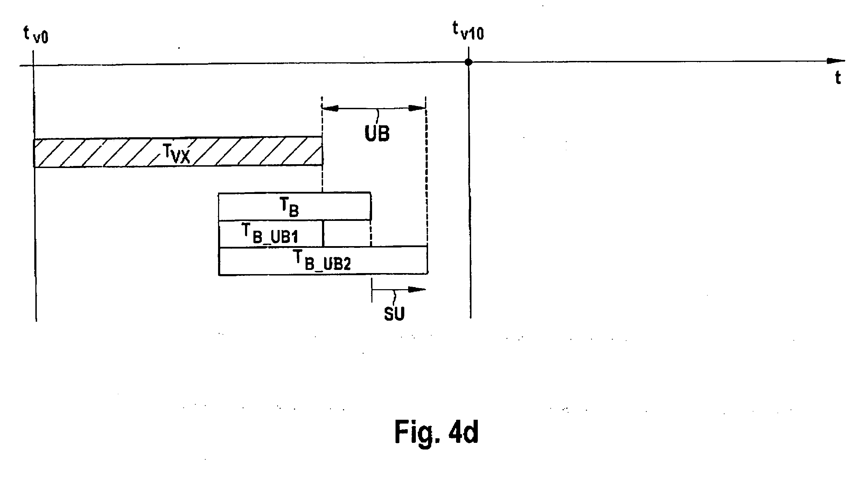

Der in Figur 4d dargestellte Fall unterscheidet sich von dem in Figur 4c gezeigten Fall lediglich dadurch, dass hier der Umschalter 2 erst deutlich nach der Öffnung des Zeitfensters $T_{VX}$ betätigt wird. Das Ende der Betätigung des Umschalters 2 erfolgt jedoch noch innerhalb des Referenzzeitfensters $T_{V10}$.

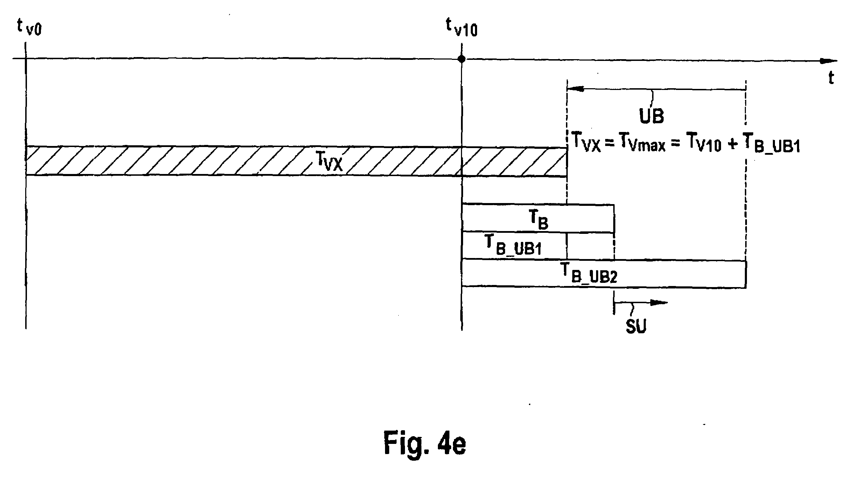

Figur 4e veranschaulicht einen Fall bei dem eine Betätigung des Umschalters 2 am Ende des Referenzzeitfensters $T_{V10}$ erfolgt. Dies bewirkt eine Verlängerung des Zeitfensters $T_{VX}$ um die Mindestbedienzeit $T_{B\_UB1}$. Mit Erreichen der Mindestbedienzeit $T_{B\_UB1}$ schließt das Zeitfenster $T_{VX}$ und das System tritt in die Umschaltbereitschaft UB ein. Da die maximal zulässige Bedienzeit $T_{B\_UB2}$ des Umschalters 2 in dem dargestellten Fall nicht überschritten wird, erfolgt eine Ausgabe des Umschaltsignals $S_U$ und folglich ein Moduswechsel.

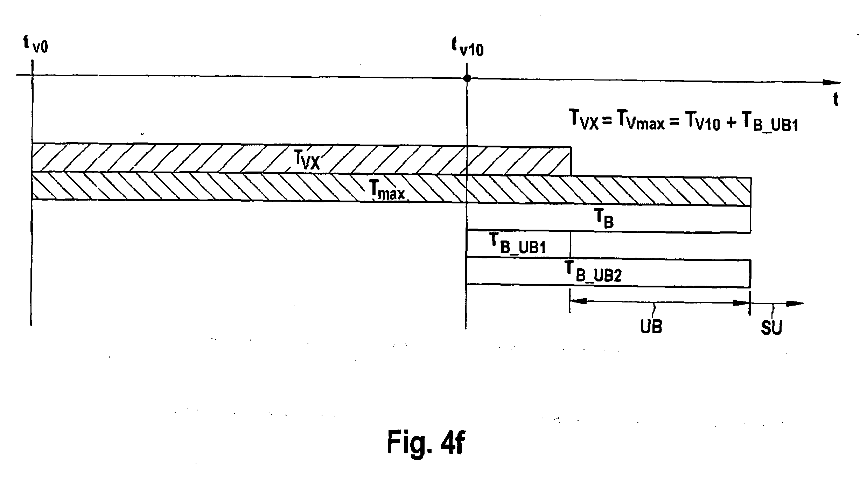

Figur 4f zeigt einen Fall, bei dem der Verstellwunsch bzw. die Tasterbedienzeit $T_B$ für die maximal zulässige Tasterbedienzeit $T_{B\_UB2}$ erfolgt.

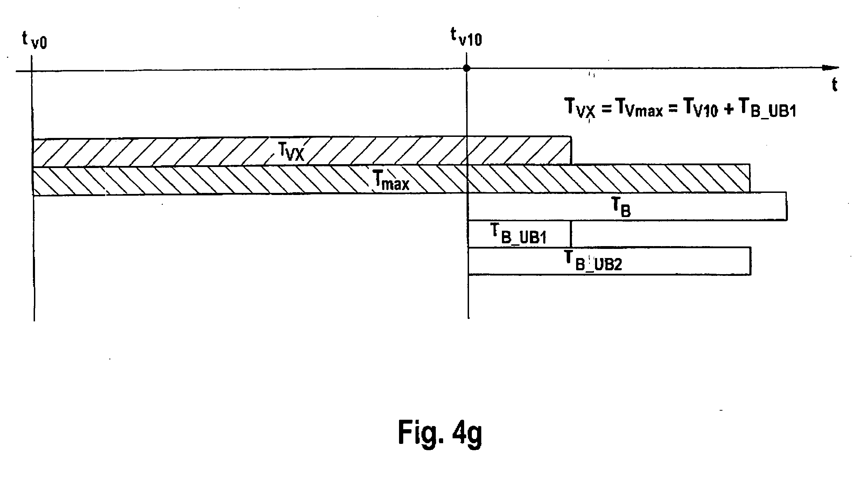

In Figur 4g zeigt eine Abwandlung von Figur 4f bei der die Tasterbedienzeit $T_B$ die maximale Bedienzeit $T_{B\_UB2}$ überschreitet. Eine Ausgabe des Umschaltsignals $S_U$ erfolgt nicht, da die maximale Zeitspanne, in der ein Wechsel zwischen dem aktivierten und dem deaktivierten Modus erfolgen kann, überschritten wird.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

So ist die Erfindung nicht auf den in den vorstehenden Figuren dargestellten, speziellen Aufbau beschränkt. Vielmehr kann eben diese auf beliebige Art und Weise modifiziert werden, ohne dass vom grundlegenden Prinzip der Erfindung abgewichen wird. Obgleich das Logikmodul 3 in Figur 1 zu Zwecken der Veranschaulichung als separate Einheit dargestellt ist, kann deren Funktion auch von einem Steuergerät zum Auslösen der Fahrzeuginsassen-Rückhalteeinrichtung 6 übernommen werden.

**Bezugszeichenliste**

| | |
|---|---|
| 1 | Steuergerät |
| 2 | Umschalter |
| 3 | Logikmodul |
| 4 | Datenbus |
| 5 | Lenksäule |
| 6 | Rückhalteeinrichtung |
| 7 | Zündung |
| 8 | Anzeige auf Taster |
| 9 | Anzeige |
| 10 | Lautsprecher |

| | |
|---|---|
| $T_{VX}$ | Verstell-Zeitfenster |
| $T_{V10}$ | Referenzwert für Zeitfenster |
| $T_{max}$ | maximale Dauer der Umschaltbereitschaft |
| $T_B$ | Bedienzeit |
| $T_{B\_UB1}$ | Mindestbedienzeit |
| $T_{B\_UB2}$ | maximal zulässige Bedienzeit |
| $T_{B\_DTC}$ | Bedienzeit für Fehlereintrag |
| $S_U$ | Umschaltsignal |

**Patentansprüche**

1. Umschaltvorrichtung für eine Fahrzeuginsassen-Rückhaltevorrichtung (6) mit:

   a.) einem Steuergerät (1) zum Auslösen mindestens einer Fahrzeuginsassen Rückhalteeinrichtung (6);
   b.) einem ersten, als Zündung ausgeführten Umschalter (7);
   c.) mindestens einem zweiten, manuell betätigbaren Umschalter (2); und
   d.) einem Logikmodul (3), das ein Umschaltsignal ($S_U$) zum Umschalten der Fahrzeuginsassen-Rückhalteinrichtung (6) zwischen einem aktiven und deaktivierten Modus nur ausgibt, wenn es erkennt, dass mindestens eine erste zu erkennende Bedingung, die eine manuelle Betätigung des zweiten Umschalters (2) innerhalb eines Zeitfensters ($T_{Vx}$) nach der manuellen Betätigung des ersten Umschalters (7) bezeichnet, erfüllt ist.

2. Vorrichtung nach Anspruch 1, **dadurch gekennzeichnet, dass** das Logikmodul den zuletzt eingestellten Betriebszustand erhält, wenn kein Umschaltsignal der Fahrzeuginsassen-Rückhalteeinrichtung (6) zwischen einem aktiven und deaktivierten Modus erfolgt.

3. Vorrichtung nach Anspruch 2, **dadurch gekennzeichnet, dass** das Zeitfenster ($T_{VX}$) über einen vorgegebenen Referenzwert $T_{V10}$ hinaus verlängert wird, wenn bei Ablauf des Referenzwerts ($T_{V10}$) der Umschalters (2) betätigt ist.

4. Vorrichtung nach Anspruch 2, **dadurch gekennzeichnet, dass** eine von dem Logikmodul (3) zu erkennende zweite Bedingung darin besteht, dass der Umschalter (2) länger als eine vordefinierte Mindestbedienzeit ($T_{B\_UB1}$) und kürzer als eine vordefinierte Maximalbedienzeit ($T_{B\_UB2}$) bedient wird.

5. Vorrichtung nach Anspruch 1, **dadurch gekennzeichnet, dass** eine von dem Logikmodul (3) zu erkennende erste Bedingung die Betätigung eines weiteren Umschalters (2) ist.

6. vorrichtung nach Anspruch 5, **dadurch gekennzeichnet, dass** eine von dem Logikmodul (3) zu erkennende zweite Bedingung die im Wesentlichen gleichzeitige Betätigung der beiden Umschalter (2) ist.

7. Vorrichtung nach Anspruch 5 oder 6, **dadurch gekennzeichnet, dass** die beiden Umschalter (2) durch eine Lenksäule (5) voneinander getrennt sind.

8. Vorrichtung nach einem der vorhergehenden Ansprüche 1 bis 4, **dadurch gekennzeichnet, dass** der Umschalter (2) ein Taster ist.

9. Vorrichtung nach einem der vorhergehenden Ansprüche 1 bis 4, **dadurch gekennzeichnet, dass** der Umschalter (2) ein Lenkstockhebel (LSH) ist.

10. Vorrichtung nach Anspruch 9, **dadurch gekennzeichnet, dass** der Umschalter (2) mit einer Vielzahl von weiteren Funktionen belegt ist.

11. Vorrichtung nach einem der vorhergehenden Ansprüche 1 bis 10, **dadurch gekennzeichnet, dass** ein visueller und/oder akustischer Hinweis erfolgt, wenn:

    das Logikmodul (3) das Öffnen eines Zeitfensters ($T_{VX}$) erkennt, oder wenn
    das Logikmodul (3) erkennt, dass der Umschalter (2) für eine Mindestbedienzeit ($T_{B\_UB1}$) betätigt ist, oder wenn
    das Logikmodul (3) ein Umschaltsignal ($S_U$) ausgibt.

12. Vorrichtung nach einem der vorhergehenden Ansprüche 1 bis 11, **gekennzeichnet durch** mindestens eine Ausgabeeinrichtung (8, 9, 10), die gleichzeitig visuell und/oder akustisch signalisieren, dass die Fahrzeuginsassen-Rückhalteeinrichtung (6) deaktiviert oder umgeschaltet ist.

13. Vorrichtung nach einem der vorhergehenden Ansprüche 1 bis 12, **dadurch gekennzeichnet, dass** das Logikmodul (3) die Ausgabe des Umschaltsignals ($S_U$) unterdrückt, wenn mindestens einer der folgenden Bedingungen vorliegt, nämlich
    wenn das Fahrzeug sich in Bewegung befindet, oder
    wenn ein Motor des Fahrzeugs in Betrieb ist, oder
    wenn eine vordefinierte Zeitspanne, in der die Fahrzeuginsassen-Rückhalteeinrichtung (6) verstellbar ist, überschritten wird, oder der Umschalter (2) zu kurz oder gar nicht betätigt wird, oder wenn ein Systemfehler der Fahrzeuginsassen-Rückhalteeinrichtung (6) vorliegt.

14. Vorrichtung nach einem der vorhergehenden Ansprüche 1 bis 13, **dadurch gekennzeichnet, dass** die Fahrzeuginsassen-Rückhalteeinrichtung (6) ein Airbag ist.

15. Verfahren zum Umschalten einer Fahrzeuginsassen-Rückhalteeinrichtung (6) zwischen einem aktiven und einem deaktivierten Modus, wobei zwischen dem aktiven und dem deaktivierten Modus gewechselt wird, wenn mindestens ein Umschalter (2) manuell betätigt wird, und die Betätigung des Umschalters (2) innerhalb eines vorgegebenen Zeitfensters ($T_{VX}$) nach Aktivieren der Zündung (7) des Fahrzeugs erfolgt und mindestens eine weitere Bedingung erfüllt.

16. Verfahren zum Umschalten einer Fahrzeuginsassen-Rückhalteeinrichtung (6) zwischen einem aktiven und einen deaktivierten Modus, wobei zwischen dem aktiven und dem deaktivierten Modus gewechselt wird, wenn mindestens zwei getrennt angeordnete Umschalter (2) im Wesentlichen gleichzeitig manuell betätigt werden.

17. Verfahren nach einem der vorhergehenden Ansprüche 15, 16, **dadurch gekennzeichnet, dass** zwischen dem aktiven und dem deaktivierten Modus mit einer Vorrichtung nach einem der vorhergehenden Vorrichtungsansprüche 1 bis 14 gewechselt wird.

## Claims

1. Switchover device for a vehicle occupant restraint device (6) with:

   a) a control device (1) for activating at least one vehicle occupant restraint device (6);
   b) a first changeover switch (7) configured as ignition means;
   c) at least one second manually operable changeover switch (2); and
   d) a logic module (3), which emits a switchover signal ($S_U$) for switchover of the vehicle occupant restraint device (6) between an active and a deactivated mode only when it detects that at least one first condition to be detected, which designates a manual operation of the second changeover switch (2) within a time window ($T_{vx}$) after the manual operation of the first changeover switch (7), is met.

2. Device according to claim 1, **characterised in that** the logic module receives the operating state last set if no switchover signal of the vehicle occupant restraint device (6) between an active and deactivated mode occurs.

3. Device according to claim 2, **characterised in that** the time window ($T_{vx}$) is extended beyond a predetermined reference value $T_{v10}$ if the changeover switch (2) is operated on expiry of the reference value ($T_{v10}$).

4. Device according to claim 2, **characterised in that** a second condition to be detected by the logic module (3) consists of the changeover switch (2) being operated for longer than a predefined minimum operating time ($T_{B\_UB1}$) and for less than a predefined maximum operating time ($T_{B\_UB2}$).

5. Device according to claim 1, **characterised in that** a first condition to be detected by the logic module (3) is the operation of a further changeover switch (2).

6. Device according to claim 5, **characterised in that** a second condition to be detected by the logic module (3) is the substantially simultaneous operation of the two changeover switches (2).

7. Device according to claim 5 or 6, **characterised in that** the two changeover switches (2) are separated from one another by a steering column (5).

8. Device according to one of the preceding claims 1 to 4, **characterised in that** the changeover switch (2) is a button.

9. Device according to one of the preceding claims 1 to 4, **characterised in that** the changeover switch (2) is a steering column lever (LSH).

10. Device according to claim 9, **characterised in that** the changeover switch (2) is provided with a multiplicity of functions.

11. Device according to one of the preceding claims 1 to 10, **characterised in that** a visual and/or acoustic message occurs when:

the logic module (3) detects the opening of a time window ($T_{vx}$), or when
the logic module (3) detects that the changeover switch (2) is operated for a minimum operation time ($T_{B\_UB1}$), or when
the logic module (2) emits a switchover signal ($S_U$).

12. Device according to one of the preceding claims 1 to 11, **characterised by** at least one output device (8, 9, 10), which simultaneously indicates visually and/or acoustically that the vehicle occupant restraint device (6) is deactivated or switched over.

13. Device according to one of the preceding claims 1 to 12, **characterised in that** the logic module (3) suppresses the emission of the switchover signal ($S_U$) when at least one of the following conditions is present, namely if the vehicle is moving, or if an engine of the vehicle is in operation, or if a predefined time span, in which the vehicle occupant restraint device (6) is adjustable, is exceeded, or the changeover switch (2) is operated too briefly or not at all, or if a system error of the vehicle occupant restraint device (6) occurs.

14. Device according to one of the preceding claims 1 to 13, **characterised in that** the vehicle occupant restraint device (6) is an airbag.

15. Method for switching over a vehicle occupant restraint device (6) between an active and a deactivated mode, wherein changeover between the active and the deactivated mode occurs when
at least one changeover switch (2) is manually operated, and the operation of the changeover switch (2) occurs within a predetermined time window ($T_{vx}$) after activating the ignition (7) of the vehicle and at least one further condition is? met.

16. Method for switching over a vehicle occupant restraint device (6) between an active and a deactivated mode, wherein changeover between the active and the deactivated mode occurs when at least two separately arranged changeover switches (2) are manually operated substantially simultaneously.

17. Method according to one of the preceding claims 15, 16, **characterised in that** changeover between the active and the deactivated mode occurs with a device according to one of the preceding device claims 1 to 14.


**Revendications**

1. Dispositif de commutation pour un dispositif de retenue (6) pour un occupant d'un véhicule, comportant :

a) un dispositif de commande (1) pour déclencher au moins un dispositif de retenue (6) d'un occupant de véhicule ;
b) un premier commutateur (7) réalisé sous forme d'allumage ;
c) au moins un deuxième commutateur (2) susceptible d'être actionné manuellement ; et
d) un module logique (3), qui délivre un signal de commutation ($S_u$) pour commuter le dispositif de retenue (6) d'un occupant de véhicule entre un mode activé et un mode désactivé uniquement lorsqu'il détecte qu'au moins une première condition à détecter est remplie, à savoir un actionnement manuel du deuxième commutateur (2) à l'intérieur d'une fenêtre de temps ($T_{vx}$) après l'actionnement manuel du premier commutateur (7).

2. Dispositif selon la revendication 1, **caractérisé en ce que** le module logique reçoit l'état de fonctionnement réglé en dernier, lorsqu'il n'est délivré aucun signal de commutation du dispositif de retenue (6) d'un occupant de véhicule entre un mode activé et un mode désactivé.

3. Dispositif selon la revendication 2, **caractérisé en ce que** la fenêtre de temps ($T_{vx}$) est prolongée au-delà d'une valeur de référence ($T_{v10}$) prédéfinie, lorsque le commutateur (2) est actionné à la fin de la valeur de référence ($T_{v10}$).

4. Dispositif selon la revendication 2, **caractérisé en ce que** selon une deuxième condition à détecter par le module logique (3) le commutateur (2) est actionné pendant une durée supérieure à une durée d'actionnement minimale ($T_{B\_UB1}$) prédéfinie et inférieure à une durée d'actionnement maximale ($T_{B\_UB2}$) prédéfinie.

5. Dispositif selon la revendication 1, **caractérisé en ce qu'**une première condition, à détecter par le module logique (3) est l'actionnement d'un autre commutateur (2).

6. Dispositif selon la revendication 5, **caractérisé en ce qu'**une deuxième condition, que doit détecter le module logique (3), est l'actionnement sensiblement simultané des deux commutateurs (2).

7. Dispositif selon la revendication 5 ou 6, **caractérisé en ce que** les deux commutateurs (2) sont séparés l'un de l'autre par une colonne de direction (5).

8. Dispositif selon une des revendications précédentes 1 à 4, **caractérisé en ce que** le commutateur (2) est un bouton poussoir.

9. Dispositif selon une des revendications précédentes 1 à 4, **caractérisé en ce que** le commutateur (2) est un levier (LSH) de la colonne de direction.

10. Dispositif selon la revendication 9, **caractérisé en ce qu'**une pluralité de fonctions supplémentaires sont affectées au commutateur (2).

11. Dispositif selon une des revendications précédentes 1 à 10, **caractérisé en ce qu'**une signalisation visuelle et/ou acoustique est délivrée lorsque :

   - le module logique (3) détecte l'ouverture d'une fenêtre de temps ($T_{vx}$), ou lorsque
   - le module logique (3) détecte que le commutateur (2) est actionné pendant une durée d'actionnement minimale ($T_{B\_UB1}$) ou lorsque
   - le module logique (3) délivre un signal de commutation ($S_u$).

12. Dispositif selon une des revendications précédentes 1 à 11, **caractérisé par** au moins un dispositif d'émission (8, 9, 10) qui signale en même temps visuellement et/ou acoustiquement que le dispositif de retenue (6) d'un occupant de véhicule est désactivé ou commuté.

13. Dispositif selon une des revendications précédentes 1 à 12, **caractérisé en ce que** le module logique (3) neutralise l'émission du signal de commutation ($S_u$) lorsqu'au moins une des conditions suivantes est remplie, à savoir lorsque le véhicule se déplace, ou lorsqu'un moteur du véhicule est en cours de fonctionnement, ou lorsqu'un intervalle de temps prédéfini, dans lequel est susceptible d'être réglé le dispositif de retenue (6) d'un occupant de véhicule, est dépassé, ou le commutateur (2) est actionné trop brièvement ou pas du tout, ou en présence d'une erreur système du dispositif de retenue (6) d'un occupant de véhicule.

14. Dispositif selon une des revendications précédentes 1 à 13, **caractérisé en ce que** le dispositif de retenue (6) d'un occupant de véhicule est un coussin gonflable de sécurité.

15. Procédé de commutation d'un dispositif de retenue (6) d'un occupant de véhicule entre un mode activé et un mode désactivé, dans lequel on passe du mode activé en mode désactivé lorsqu'au moins un commutateur (2) est actionné manuellement, et l'actionnement du commutateur (2) est effectué à l'intérieur d'une fenêtre de temps ($T_{vx}$) prédéfinie après l'activation de l'allumage (7) du véhicule et lorsqu'au moins une condition supplémentaire est remplie.

16. Procédé de commutation d'un dispositif de retenue (6) d'un occupant de véhicule entre un mode activé et un mode désactivé, dans lequel on passe du mode activé en mode désactivé lorsqu'au moins deux commutateurs (2), agencés pour être séparés l'un de l'autre, sont actionnés manuellement sensiblement en même temps.

17. Procédé selon l'une des revendications précédentes 15, 16, **caractérisé en ce que** le passage du mode activé en mode désactivé est effectué avec un dispositif selon 1 l'une des revendications de dispositif précédentes 1 à 14.

**Fig. 1**

**Fig. 2**

**Fig. 3**

Fig. 4a

$T_{VX} = T_{V10}$

$T_B < T_{B\_UB1}$ innerhalb $T_{V10}, t_{bx} < t_{v10}$

$t_{v0}$    $t_{v10}$

$t$

$T_{VX}$

$T_B < T_{B\_UB1}$

$T_{VX} = T_{V10} + T_B$

$tbx > tv10$

## Fig. 4b

**Fig. 4c**

EP 1 702 810 B1

EP 1 702 810 B1

Fig. 4d

Fig. 4e

$t_{V0}$

$t_{V10}$

$t$

$T_{VX} = T_{Vmax} = T_{V10} + T_{B\_UB1}$

$T_{VX}$

$T_{max}$

$T_B$

$T_{B\_UB1}$

$T_{B\_UB2}$

UB

SU

**Fig. 4f**

EP 1 702 810 B1

$$T_{VX} = T_{Vmax} = T_{V10} + T_{B\_UB1}$$

Fig. 4g

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10226472 A1
- DE 10139194 A1
- DE 19960179 A1
- US 6164693 A